# EUROPEAN PATENT APPLICATION

(11) **EP 4 811 258 A1**
(43) Date of publication of application: **23.09.2026**
(21) Application number: 26160323.7
(22) Date of filing: 24.02.2026
(51) Int. Cl.: G06Q 30/0251, G06Q 50/40

(54) **ADVERTISING TRANSMISSION CONTROL DEVICE, COMMUNICATION SYSTEM, ADVERTISING TRANSMISSION CONTROL METHOD, AND CARRIER MEDIUM**

(30) Priority: 21.03.2025 JP 2025047358; 18.12.2025 JP 2025265499
(71) Applicant: Ricoh Company, Ltd., Tokyo 143-8555 (JP)
(72) Inventor: Morohoshi, Hiroshi, Tokyo, 143-8555 (JP)
(74) Representative: SSM Sandmair

(57) **Abstract**

An advertising transmission control device (5) for controlling transmission of advertising data related to advertising content includes a dispatch information reception unit (51), a user attribute information acquisition unit (51), a content identification information acquisition unit (51), and an advertising content transmission unit (51). The dispatch information reception unit (51) receives dispatch information including vehicle identification information for identifying a vehicle dispatched in response to a dispatch request from a user terminal of a user. The user attribute information acquisition unit (51) acquires attribute information of the user from a user information management device that stores the attribute information for each user. The content identification information acquisition unit (51) acquires content identification information corresponding to the attribute information of the user acquired by the user attribute information acquisition unit (51), from an advertising information management device that stores the content identification information for identifying the advertising content in association with attribute information of a target recipient of the advertising content. The advertising content transmission unit (51) transmits the advertising data related to the advertising content to a display control device of the vehicle identified by the vehicle identification information. The advertising content is identified by the content identification information acquired by the content identification information acquisition unit (51).

## Description

### BACKGROUND

### Technical Field

The present disclosure relates to a technique for displaying advertisements appropriate for passenger attributes on monitors installed in vehicles, and particularly relates to an advertising transmission control device, a communication system, an advertising transmission control method, and a carrier medium/non-transitory recording medium.

### Related Art

Currently, a business model has been developed in which advertising content, such as videos or still images, is displayed on monitors inside vehicles such as trains and taxis, and a certain advertising fee is received from advertisers.

In the case of television advertising, the viewing rate is calculated using data from audience rating measurement devices installed at random in households nationwide. In contrast, for advertisements inside trains, the number of viewers is estimated based on the passenger density within the train.

As a method for measuring passenger density, it has been proposed to transmit short-wavelength electromagnetic waves toward the windows of a moving train from the lateral side, receive the electromagnetic waves that enter the train through the windows, attenuated by the window glass and passengers, and exit through the opposite windows, and then calculate the boarding rate (degree of congestion) based on the attenuation ratio of the electromagnetic waves between transmission and reception (see Japanese Unexamined Patent Application Publication No. H05-330428).

However, even when the boarding rate is calculated by such prior methods, passengers in vehicles such as trains and taxis increasingly tend to focus on their own smartphones. As a result, when the advertising content inside the vehicle does not align with the interests of the passengers, they are unlikely to pay attention to the advertisement. Consequently, even if the number of viewers is presented to advertisers based on factors such as the boarding rate, the effectiveness of the advertisement in terms of return on investment remains uncertain from the advertiser's perspective.

### SUMMARY

The present disclosure described herein provides an advertising transmission control device for controlling transmission of advertising data related to advertising content. The device includes a dispatch information reception unit, a user attribute information acquisition unit, a content identification information acquisition unit, and an advertising content transmission unit. The dispatch information reception unit receives dispatch information including vehicle identification information for identifying a vehicle dispatched in response to a dispatch request from a user terminal of a user. The user attribute information acquisition unit acquires attribute information of the user from a user information management device that stores the attribute information for each user. The content identification information acquisition unit acquires content identification information corresponding to the attribute information of the user acquired by the user attribute information acquisition unit, from an advertising information management device that stores the content identification information for identifying the advertising content in association with attribute information of a target recipient of the advertising content. The advertising content transmission unit transmits the advertising data related to the advertising content to a display control device of the vehicle identified by the vehicle identification information. The advertising content is identified by the content identification information acquired by the content identification information acquisition unit.

The present disclosure described herein provides a communication system including the advertising transmission control device and the user terminal of the user to communicate with the advertising transmission control device. The user terminal is installed with an application.

The present disclosure described herein provides a communication system including a user terminal of a user, a display control device that displays advertising content on a display of a vehicle, and an advertisement transmission system that causes the display control device to perform control to display the advertising content. The advertisement transmission system includes a user information management device, an advertising information management device, a dispatch information reception unit, a user attribute information acquisition unit, a content identification information acquisition unit, and an advertising content transmission unit. The user information management device stores attribute information for each user. The advertising information management device stores content identification information for identifying the advertising content in association with attribute information of a target recipient of the advertising content. The dispatch information reception unit receives dispatch information including vehicle identification information for identifying the vehicle dispatched in response to a dispatch request from the user terminal of the user. The user attribute information acquisition unit acquires the attribute information of the user from the user information management device. The content identification information acquisition unit acquires, from the advertising information management device, the content identification information corresponding to the attribute information of the user acquired by the user attribute information acquisition unit. The advertising content transmission unit transmits advertising data related to the advertising content to the display control device of the vehicle identified by the vehicle identification information. The advertising content is identified by the content identification information acquired by the content identification information acquisition unit. The display control device includes a display control unit that displays the identified advertising content on the display.

The present disclosure described herein provides an advertising transmission control method executed by a computer that controls transmission of advertising data related to advertising content. The method includes receiving dispatch information including vehicle identification information for identifying a vehicle dispatched in response to a dispatch request from a user terminal of a user; acquiring attribute information of the user from a user information management device that stores the attribute information for each user; acquiring content identification information corresponding to the attribute information of the user from an advertising information management device that stores the content identification information for identifying the advertising content in association with attribute information of a target recipient of the advertising content; and transmitting the advertising data related to the advertising content identified by the content identification information to a display control device of the vehicle identified by the vehicle identification information.

The present disclosure described herein provides a carrier medium carrying computer-readable code for controlling a computer system to carry out the advertising transmission control method.

Accordingly, the effectiveness of advertisements in terms of return on investment in a vehicle is enhanced more than before by increasing opportunities for passengers to view advertising content in the vehicle even when the effectiveness of the advertisement in terms of return on investment remains uncertain.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram of a communication system;
FIG. 2 is a block diagram illustrating a hardware configuration of a user terminal;
FIG. 3 is a block diagram illustrating a hardware configuration of an advertising transmission control device;
FIG. 4 is a block diagram illustrating a functional configuration of each device included in a communication system;
FIG. 5 is a conceptual diagram illustrating an initial state of an advertising transmission information management table;
FIG. 6 is a conceptual diagram illustrating a performance management table;
FIG. 7 is a conceptual diagram illustrating a user information management table;
FIG. 8 is a conceptual diagram illustrating an operation information management table;
FIG. 9 is a conceptual diagram illustrating a dispatch information management table;
FIG. 10 is a conceptual diagram illustrating an advertising information management table;
FIG. 11 is a sequence diagram illustrating a process from when a user requests dispatch of a taxi to when an advertising transmission control device acquires user information;
FIG. 12 is a sequence diagram illustrating a process for an advertising transmission device to prepare for transmitting advertising data related to advertising content to a predetermined display control device at a predetermined time;
FIG. 13 is a diagram illustrating an advertising transmission information management table storing additional information including a transmission time of advertising data related to advertising content, an advertising content display vehicle, and a content number;
FIG. 14 is a sequence diagram illustrating a process in which advertising content is displayed and a user terminal responds to indicate that the user has viewed the advertising content and empathized with the advertising content;
FIG. 15A is a diagram illustrating a monitor located at a predetermined position inside a taxi, the monitor displaying advertising content;
FIG. 15B is a diagram illustrating an advertising transmission information management table storing an additional indicator denoting that the advertising content of FIG. 15A has been displayed;
FIG. 16A is a diagram illustrating a screen of a user terminal for inquiring whether the user has viewed an advertising content;
FIG. 16B is a diagram illustrating an advertising transmission information management table storing an additional indicator denoting that the advertising content of FIG. 16A has been viewed;
FIG. 17A is a diagram illustrating a screen of a user terminal indicating that the user has pressed an empathy button;
FIG. 17B is a diagram illustrating an advertising transmission information management table storing an additional indicator denoting that the user has empathized with an advertising content; and
FIG. 18 is a sequence diagram illustrating a process for an advertising transmission control device to store performance data of display, viewing, and empathy of advertising content after a user alights from a taxi.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below.

As used herein, the singular forms "a," "an," and "the" are intended to include the plural forms as well, unless the context clearly indicates otherwise.

For the sake of simplicity, identical or similar reference numerals denote identical or similar elements such as parts and materials having the same functions, and redundant descriptions thereof are omitted unless otherwise required.

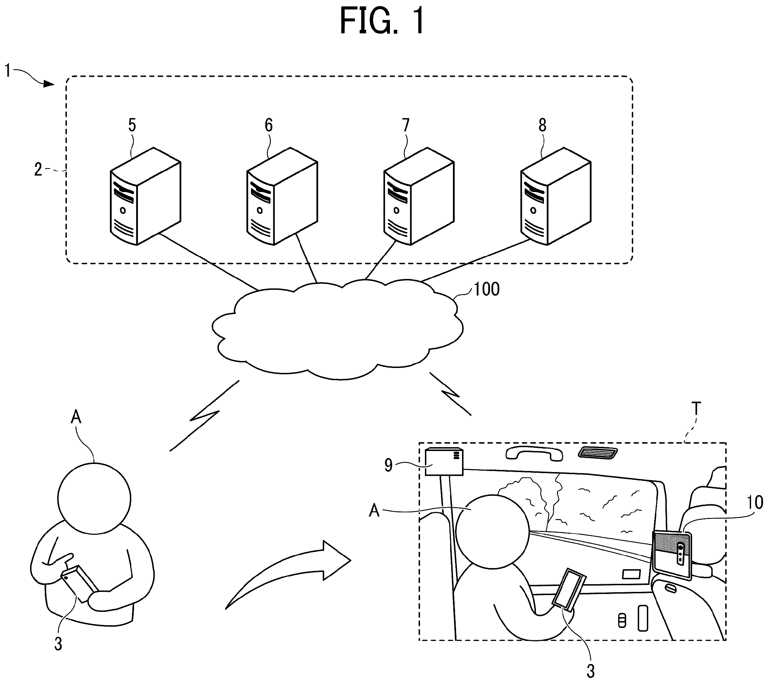

Embodiments of the present disclosure are described below with reference to FIGS. 1 to 18.

### Overall Configuration of Communication System

An overall configuration of a communication system 1 is described below with reference to FIG. 1. FIG. 1 is a schematic diagram of the communication system 1. A case where a taxi T is used is described below as an example of a case where a user (person) uses a vehicle.

FIG. 1 illustrates a situation when a user A boards the taxi T, where a display control device 9 located inside the taxi T displays advertising content related to the user A on a monitor 10 in front of the user A, who is a passenger in the left rear seat. The monitor 10 is an example of a display. The monitor 10 displays advertising content based on advertising data representing information in image, video, audio, text formats, or combinations thereof. The "advertising content" refers to content forming an advertisement that is displayed or reproduced on the monitor 10.

The communication system 1 includes an advertising transmission system 2, a user terminal 3 (including a dedicated application), and the display control device 9.

The advertising transmission system 2 includes an advertising transmission control device 5, a user information management device 6, an operation information management device 7, and an advertising information management device 8. The advertising transmission system 2 manages (stores) information related to advertising content, and transmits advertising data related to advertising content, that is, the data of advertising content, to the display control device 9. The advertising transmission control device 5 communicates with the user information management device 6, the operation information management device 7, the advertising information management device 8, and the display control device 9 via a communication network 100 such as the Internet or a local area network (LAN).

The user terminal 3 is, for example, a smartphone, a mobile phone, or a tablet terminal. A dedicated application for communication with the advertising transmission control device 5 is installed on the user terminal 3. The dedicated application may be referred to simply as "application" in the following description.

To cause the advertising content related to the user A to be displayed on the monitor 10 in front of the user A who has boarded the taxi T, the advertising transmission control device 5 transmits advertising data related to the advertising content to the display control device 9. The monitor 10 may include a monitor in front of the user A, all monitors within the taxi T, or other monitors within the taxi T, such as a monitor in front of a next seat and a monitor for a driver).

The user information management device 6 manages (stores) user information including attribute information indicating attributes such as names of users registered in advance.

The operation information management device 7 manages (stores) real-time operation information for each taxi.

The advertising information management device 8 manages (stores) advertising information indicating when advertising data related to which advertising content is transmitted to a user of which attribute in which area (a predetermined area on a route between a departure location and a destination).

The display control device 9 is installed in each taxi, and performs control to display advertising content related to advertising data received from the advertising transmission control device 5 on the monitor 10.

### Hardware Configuration

### Hardware Configuration of User Terminal

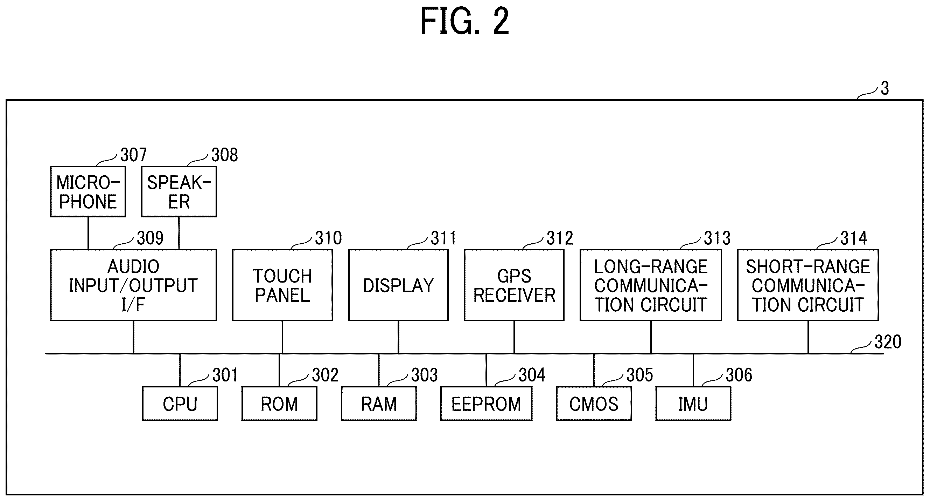

An electric hardware configuration of the user terminal 3 is described below with reference to FIG. 2. FIG. 2 is a block diagram illustrating an electric hardware configuration of the user terminal 3.

As illustrated in FIG. 2, the user terminal 3 includes, as a computer, a central processing unit (CPU) 301, a read-only memory (ROM) 302, a random-access memory (RAM) 303, an electrically erasable programmable read-only memory (EEPROM) 304, a complementary metal oxide semiconductor (CMOS) sensor 305, and an inertial measurement unit (IMU) 306.

The CPU 301 controls the overall operation of the user terminal 3. The ROM 302 stores programs, for example, a program used by the CPU 301 and an initial program loader (IPL) for booting the CPU 301.

The RAM 303 is used as a work area for the CPU 301. The EEPROM 304 reads or writes various data such as a program for a user terminal under the control of the CPU 301.

The CMOS sensor 305 is an example of a built-in imaging device that captures an image of a subject or a similar object under the control of the CPU 301 to obtain image data. Instead of the CMOS sensor, an imaging device such as a charge-coupled device (CCD) sensor may be used.

The IMU 306 includes an accelerometer and an angular velocity (gyro) sensor. The accelerometer detects translational motion, and the angular velocity sensor detects rotational motion.

The user terminal 3 further includes a microphone 307, a speaker 308, an audio input/output interface (I/F) 309, a touch panel 310, a display 311, a Global Positioning System (GPS) receiver 312, a long-range communication circuit 313, and a short-range communication circuit 314.

The microphone 307 is a built-in circuit that converts sound into electrical signals. The speaker 308 is a built-in circuit that converts electrical signals into physical vibration to produce sound such as music or voice. The audio input/output I/F 309 is a circuit that processes the input and output of audio signals between the microphone 307 and the speaker 308 under the control of the CPU 301. The touch panel 310 is an example of an input device that allows a user to operate the user terminal 3 by touching or pressing a screen of the display 311. The display 311 is an example of a display that displays images of subjects and various icons, and may be, for example, a liquid crystal display (LCD) or an organic electroluminescent display. The GPS receiver 312 receives a GPS signal from a GPS satellite.

The long-range communication circuit 313 communicates with other devices and servers via the communication network 100 such as the Internet or a LAN.

The short-range communication circuit 314 communicates with external terminals (apparatuses) by using short-range wireless communication technologies such as near-field communication (NFC), Bluetooth^{®}, or Wi-Fi.

The user terminal 3 further includes a bus line 320. The bus line 320 is, for example, an address bus or a data bus that electrically connects the components illustrated in FIG. 2, such as the CPU 301.

### Hardware Configuration of Advertising Transmission Control Device

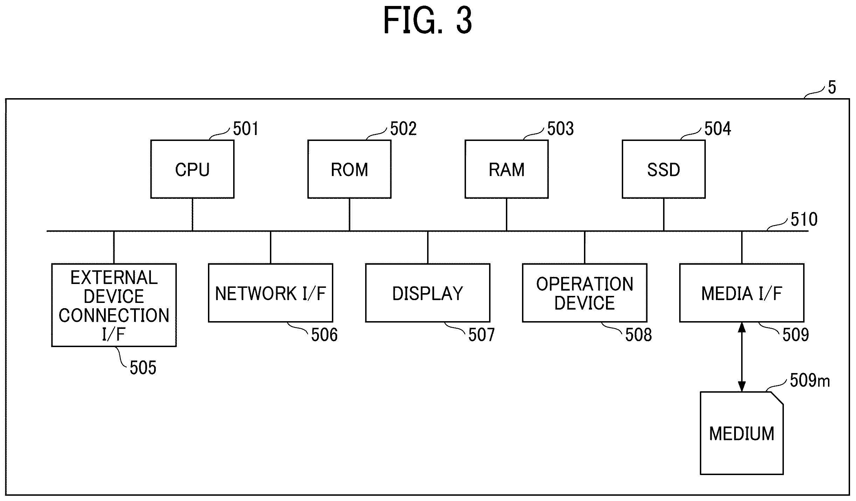

A hardware configuration of the advertising transmission control device 5 is described below with reference to FIG. 3. FIG. 3 is a block diagram illustrating a hardware configuration of the advertising transmission control device 5.

As illustrated in FIG. 3, the communication control device 5 includes, as a computer, a CPU 501, a ROM 502, a RAM 503, a solid-state drive (SSD) 504, an external device connection I/F 505, a network I/F 506, a display 507, an operation device 508, a media I/F 509, and a bus line 510.

The CPU 501 controls the overall operation of the advertising transmission control device 5. The ROM 502 stores a program such as an initial program loader (IPL) used for booting the CPU 501. The RAM 503 is used as a work area for the CPU 501.

The SSD 504 reads or writes various data under the control of the CPU 501. The advertising transmission control device 5 may include a hard disk drive (HDD) in place of the SSD 504.

The external device connection I/F 505 is an interface for connection with various external devices. Examples of the external devices in this case include, but are not limited to, a display, a speaker, a keyboard, a mouse, a universal serial bus (USB) memory, and a printer.

The network I/F 506 is an interface for data communication via the communication network 100.

The display 507 is an example of a display unit that displays various images, and may be, for example, an LCD or an organic electroluminescent display.

The operation device 508 is an input unit for performing operations such as selecting and executing instructions, selecting processing targets, and moving a cursor, and includes various operation buttons, a power switch, a shutter button, and a touch panel.

The media I/F 509 controls the reading of data from, or the writing (storing) of data to in), a recording medium 509m such as a flash memory. Examples of the recording medium 509m include, but are not limited to, a digital versatile disc (DVD) and a Blu-ray Disc^{®}.

The bus line 510 is, for example, an address bus or a data bus that electrically connects the components such as the CPU 501.

The user information management device 6, the operation information management device 7, the advertising information management device 8, and the display control device 9 have substantially the same hardware configurations as the advertising transmission control device 5, and thus the description of each will be omitted.

### Functional Configuration of Communication System

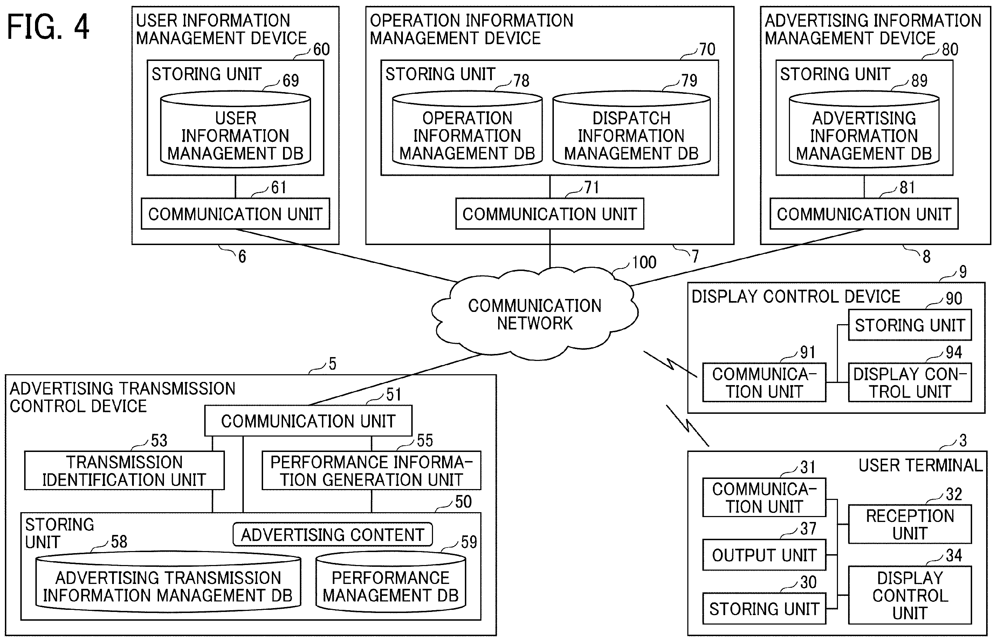

A functional configuration of each device included in the communication system 1 is described below with reference to FIG. 4. FIG. 4 is a block diagram illustrating a functional configuration of each device included in the communication system 1.

### Functional Configuration of User Terminal

The user terminal 3 includes a communication unit 31, a reception unit 32, a display control unit 34, and an output unit 37. Each of these units is a function or means implemented by any of the components illustrated in FIG. 2 operating in accordance with instructions from the CPU 301 based on a program deployed from the EEPROM 304 to the RAM 303. The user terminal 3 includes a storing unit 30 that is implemented by the RAM 303 or the EEPROM 304.

### Functional Units

The storing unit 30 stores a user identification (ID) for identifying a user of the user terminal 3.

The communication unit 31 performs data communication with the advertising transmission control device 5 via the communication network 100.

The reception unit 32 receives operation input from the user.

The display control unit 34 performs control for displaying various images on the display 311 of the user terminal 3.

The output unit 37 performs data communication with external devices, such as a Wi-Fi antenna inside the taxi T, by using short-range wireless communication technologies such as NFC, Bluetooth^{®}, or Wi-Fi.

### Functional Configuration of Advertising Transmission Control Device

The advertising transmission control device 5 includes a communication unit 51, a transmission identification unit 53, and a performance information generation unit 55. Each of these units is a function or means implemented by any of the components illustrated in FIG. 3 operating in accordance with instructions from the CPU 501 based on a program deployed from the SSD 504 to the RAM 503. The advertising transmission control device 5 includes a storing unit 50 that is implemented by the RAM 503 or the SSD 504.

### Advertising Content

The storing unit 50 stores advertising data related to advertising content of each advertiser together with the corresponding content number.

### Advertising Transmission Information Management Table

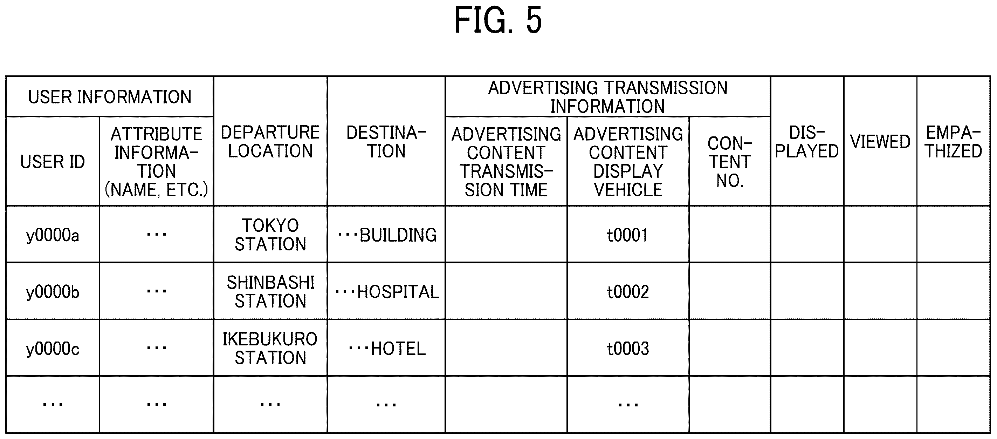

The storing unit 50 stores an advertising transmission information management database (DB) 58. For example, the storing unit 50 serves as an example of a storing unit that stores information indicating that a user has viewed advertising content and information indicating that the user has empathized with the advertising content in the advertising transmission information management DB 58, which is an example of an advertising transmission information management unit. The advertising transmission information management DB 58 includes an advertising transmission information management table having a data structure as illustrated in FIG. 5. FIG. 5 is a conceptual diagram illustrating an initial state of the advertising transmission information management table.

As illustrated in FIG. 5, the advertising transmission information management table stores user information, departure location (name), destination (name), and advertising transmission information, along with indicators such as "displayed," "viewed," and "empathized," which respectively denote the display status, viewing status, and empathy status.

The "user information" includes a user ID for identifying a user and user attribute information indicating an attribute of the user identified by the user ID. The "user attribute information" includes information indicating the user's name, gender, age, address, occupation, and other details such as hobbies, interests, place of origin, and nickname.

The "departure location" indicates a place (location) where a user boards the taxi.

The "destination" indicates a place (location) where the user alights from the taxi.

The "advertising transmission information" includes a transmission time of advertising data related to advertising content, an advertising content display vehicle (user boarding area), and a content number.

The "transmission time of advertising data related to advertising content" indicates the time at which advertising data related to advertising content is transmitted in step S52 described later.

The "advertising content display vehicle (user boarding area)" indicates a partial area within the taxi where the user is located, and is used to identify the monitor 10 that displays the advertising content.

The "content number" indicates the number for identifying the advertising content, and is an example of content identification information.

The "displayed" column indicates whether the advertising content indicated by the content number is displayed on the monitor 10.

The "viewed" column indicates whether the user indicated by the user ID has viewed the advertising content indicated by the content number and has made a response indicating that the advertising content has been viewed.

The "empathized" column indicates whether the user indicated by the user ID has viewed the advertising content indicated by the content number and has made a response indicating that the user has empathized with the advertising content.

### Performance Management Table

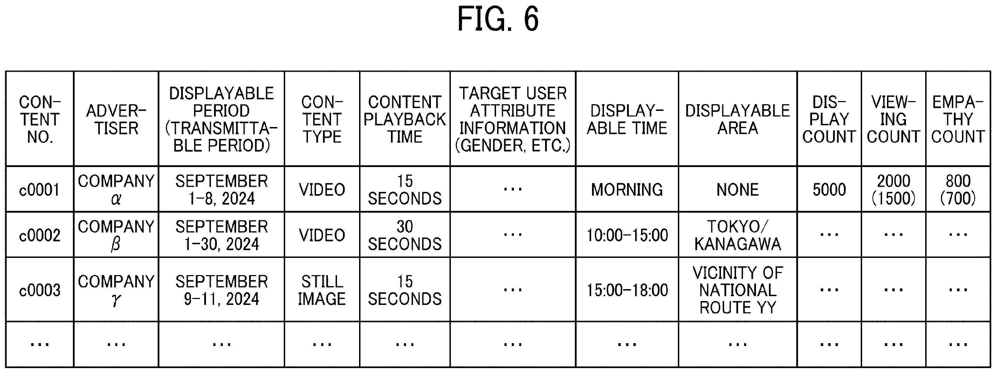

The storing unit 50 stores a performance management DB 59. The performance management DB 59 includes a performance management table having a data structure as illustrated in FIG. 6. FIG. 6 is a conceptual diagram illustrating the performance management table.

As illustrated in FIG. 6, the performance management table stores a content number, an advertiser, a displayable period (transmittable period), a content type, a content playback time, target user attribute information, a displayable time, a displayable area, a display count, a viewing count, and an empathy count in association with one another.

The "display (transmission) available period" indicates a period during which advertising content indicated by the content number is displayed (transmitted) on the monitor 10.

The "content type" indicates the type of advertising content such as video content or still image content.

The "content playback time" indicates the time during which the advertising content indicated by the content number is played back.

The "target user attribute information" indicates attributes of a user who is a target recipient of advertising content identified by the content number, that is, attributes of a target user for whom the advertising content is delivered.

The "displayable time" indicates the time range during which the advertising content indicated by the content number can be displayed in the operation time of the taxi T.

The "displayable area" indicates an area where the advertising content indicated by the content number can be displayed among areas where the taxi T passes, that is, areas along a travel route.

The "display count" indicates the total number of times the advertising content indicated by the content number is actually displayed.

The "viewing count" indicates the total number of times the user indicated by the user ID views the advertising content indicated by the content number and makes a response indicating that the advertising content has been viewed.

The "empathy count" indicates the total number of times the user indicated by the user ID views the advertising content indicated by the content number and makes a response indicating that the user has empathized with the advertising content.

### Functional Units

The communication unit 51 performs data communication with the user terminal 3, the user information management device 6, the operation information management device 7, the advertising information management device 8, and the display control device 9 via the communication network 100.

The transmission identification unit 53 identifies conditions (matters) relating to transmission of advertisement data related to advertising content tailored to user attributes. The conditions relating to transmission include a user ID of a user as a transmission target, the taxi indicating a transmission destination, an advertising content display area (for example, the left rear seat of the taxi), and a time (including date and time) at which the advertisement data related to the advertisement content is transmitted to the display control device 9.

The performance information generation unit 55 generates performance information visualizing the effectiveness of advertisements in terms of return on investment based on the data stored in the performance management DB 59.

### User Information Management Device

The user information management device 6 includes a communication unit 61. This unit is a function or means implemented by any of the components illustrated in FIG. 3 operating in accordance with instructions from the CPU 501 based on a program deployed from the SSD 504 to the RAM 503. The user information management device 6 includes a storing unit 60 that is implemented by the RAM 503 or the SSD 504.

### User Information Management Table

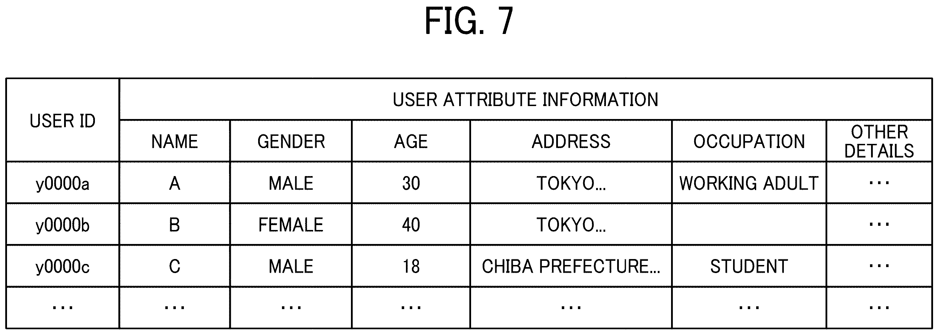

The storing unit 60 stores a user information management DB 69. The user information management DB 69 includes a user information management table having a data structure as illustrated in FIG. 7. FIG. 7 is a conceptual diagram illustrating the user information management table.

As illustrated in FIG. 7, the user information management table stores a user ID in association with user attribute information. The user attribute information is similar to the user attribute information of the advertising transmission information management table, and thus the description thereof will be omitted.

### Functional Configuration

The communication unit 61 performs data communication with the advertising transmission control device 5 via the communication network 100.

### Operation Information Management Device

The information management apparatus 7 includes a communication unit 71. This unit is a function or means implemented by any of the components illustrated in FIG. 3 operating in accordance with instructions from the CPU 501 based on a program deployed from the SSD 504 to the RAM 503. The operation information management device 7 includes a storing unit 70 that is implemented by the RAM 503 or the SSD 504.

### Operation Information Management Table

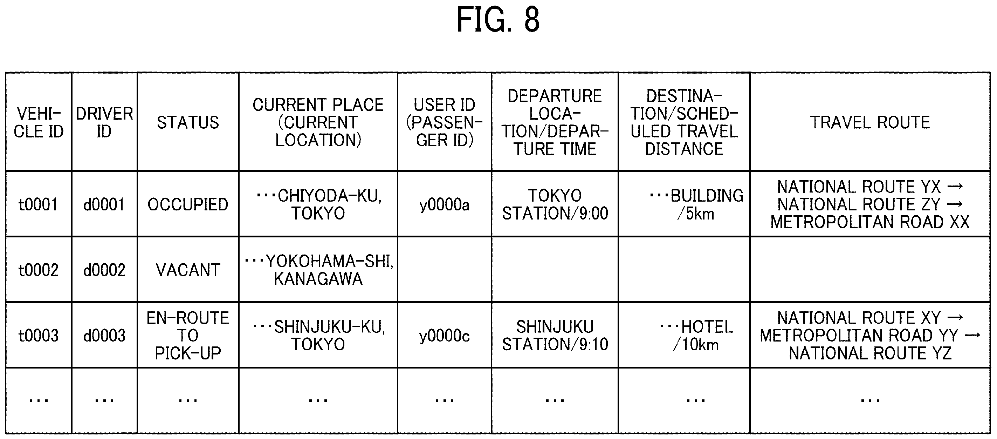

The storing unit 70 stores an operation information management DB 78. The operation information management DB 78 includes an operation information management table having a data structure as illustrated in FIG. 8. FIG. 8 is a conceptual diagram illustrating the operation information management table.

As illustrated in FIG. 8, the operation information management table stores the latest operation status information of a taxi in association with each vehicle ID for identifying a taxi and each driver ID. The vehicle ID is an example of vehicle identification information for identifying a vehicle. The operation information management device 7 can manage (store) the latest operation information of each taxi by communicating with each taxi that is equipped with a GPS antenna and a dispatch communication device to dispatch a taxi.

The "operation state information" indicates a status of a taxi, a current place (current location) of the taxi, a user ID (passenger ID), a departure location and a departure time of the taxi, a destination and a scheduled traveling distance of the taxi, and a travel route. The departure location and the destination indicate a location registered when the user uses a taxi allocation application or a location registered by the driver. The scheduled travel distance and the travel route may be calculated and derived by the operation information management device 7 based on information (a departure location, a destination, and a departure time) obtained by communicating with a taxi, or may be calculated and derived by the taxi. When the taxi calculates and derives the scheduled travel distance and the travel route, the taxi transmits the derivation result to the operation information management device 7.

### Dispatch Information Management

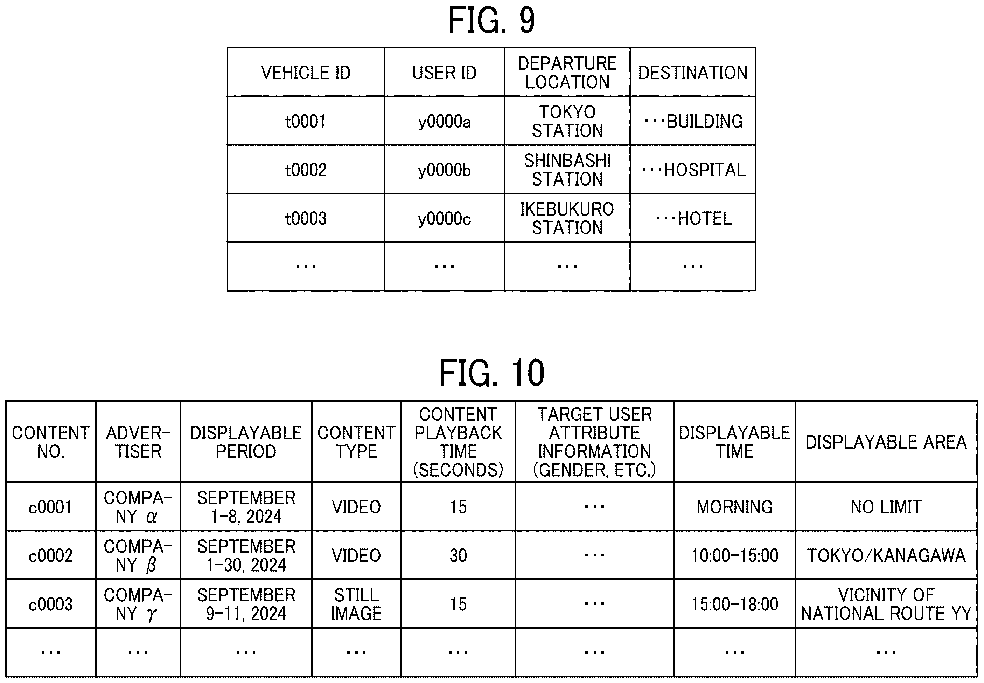

The storing unit 70 stores a dispatch information management DB 79. The dispatch information management DB 79 includes a dispatch information management table having a data structure as illustrated in FIG. 9. FIG. 9 is a conceptual diagram illustrating the dispatch information management table.

As illustrated in FIG. 9, the dispatch information management table stores a vehicle ID, a user ID, a departure location, and a destination in association with one another. These pieces of information are information registered when the user uses a taxi allocation application or information registered by the driver.

### Functional Configuration

The communication unit 71 performs data communication with the advertising transmission control device 5 via the communication network 100.

### Advertising Information Management Device

The advertising information management device 8 includes a communication unit 81. This unit is a function or means implemented by any of the components illustrated in FIG. 3 operating in accordance with instructions from the CPU 501 based on a program deployed from the SSD 504 to the RAM 503. The advertising information management device 8 includes a storing unit 80 that is implemented by the RAM 503 or the SSD 504.

### Advertising Information Management Table

The storing unit 80 stores an advertising information management DB 89. The advertising information management DB 89 includes an advertising information management table having a data structure as illustrated in FIG. 10. FIG. 10 is a conceptual diagram illustrating the advertising information management table.

As illustrated in FIG. 10, the advertising information management table stores a content number, an advertiser, a displayable period, a content type, a content playback time, target user attribute information, a displayable time, and a displayable area in association with one another. These items are similar to the items of the performance management table, and thus the description thereof will be omitted.

### Functional Configuration

The communication unit 81 performs data communication with the advertising transmission control device 5 via the communication network 100.

### Display Control Device

The display control device 9 includes a communication unit 91 and a display control unit 94. Each of these units is a function or means implemented by any of the components illustrated in FIG. 3 operating in accordance with instructions from the CPU 501 based on a program deployed from the SSD 504 to the RAM 503.

The display control device 9 includes a storing unit 90 that is implemented by the RAM 503 or the SSD 504.

### Functional Units

The communication unit 91 performs data communication with the advertising transmission control device 5 via the communication network 100.

The display control unit 94 performs control to display advertising content received from the advertising transmission control device 5 on the monitor 10 as a predetermined monitor.

### Processes or Operations

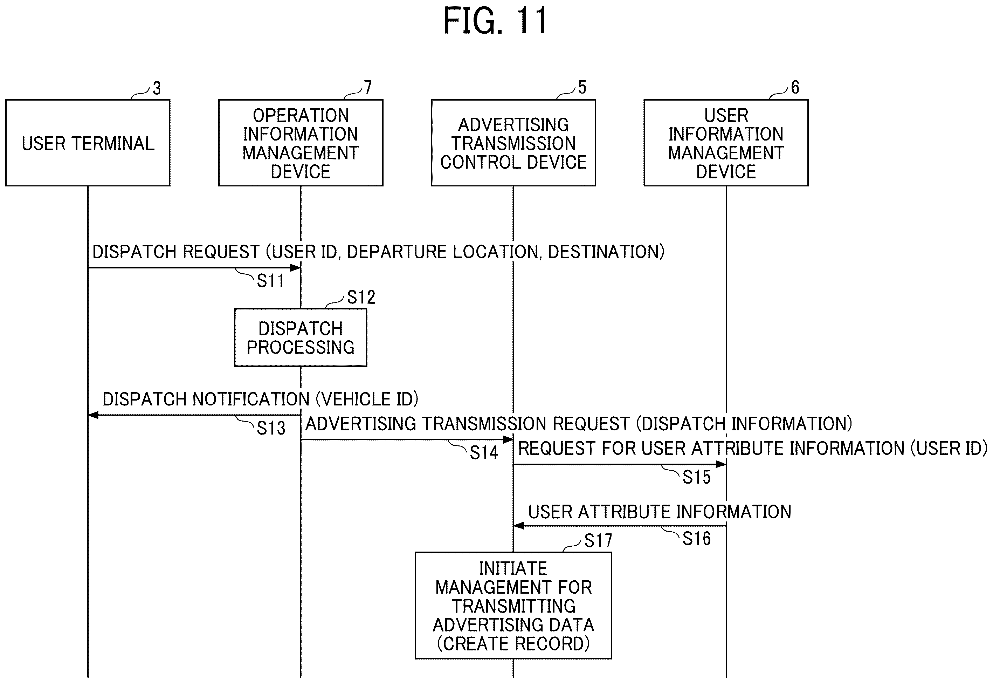

Example processes or operations are described below with reference to FIGS. 11 to 18.

### User Information Acquisition Process

Referring to FIG. 11, a description is given below of a process from when the user A requests dispatch of a taxi using a taxi dispatch application installed on the user terminal 3 to when the advertising transmission control device 5 acquires user attribute information. FIG. 11 is a sequence diagram illustrating a process from when the user A requests dispatch of a taxi dispatch to when the advertising transmission control device 5 acquires the user attribute information.

When the user A inputs a departure location and a destination using the taxi allocation application on the user terminal 3, in step S11, the reception unit 32 receives the departure location and the destination. Then, the communication unit 31 transmits a dispatch request to the operation information management device 7. The dispatch request includes the user ID of the user A registered in advance in the taxi dispatch application and the information on the departure location and the destination received by the reception unit 32. Consequently, the communication unit 71 of the operation information management device 7 receives the dispatch request.

In step S12, the operation information management device 7 performs dispatch processing. Specifically, the communication unit 71 searches the operation information management DB 78, and extracts a vehicle ID whose status is "vacant" and whose current location is closest to the departure location received in step S11. The communication unit 71 generates a new record in the dispatch information management DB 79, and stores the extracted vehicle ID in association with the information (the user ID, the departure location, and the destination) received in step S11 in the record. The dispatch processing may include calculation of an expected arrival time at which the taxi arrives at the departure location.

In step S13, the communication unit 71 transmits a dispatch notification to the taxi dispatch application of the user terminal 3. The dispatch notification includes the vehicle ID of the vehicle dispatched in step S12. Consequently, the communication unit 31 of the user terminal 3 receives the dispatch notification, and the display control unit 34 displays the details of the dispatch notification on the display 311 of the user terminal 3.

In step S14, the communication unit 71 of the operation information management device 7 transmits an advertising transmission request including dispatch information to the advertising transmission control device 5. The dispatch information includes information for the record generated in step S12, such as the vehicle ID, the user ID, the departure location, and the destination. Consequently, the communication unit 51 of the advertising transmission control device 5 receives the advertising transmission request including the dispatch information.

In step S15, the communication unit 51 transmits a request for user attribute information to the user information management device 6. This request includes the user ID received in step S14. Consequently, the communication unit 61 of the user information management device 6 receives the request for user attribute information.

In step S16, the communication unit 61 of the user information management device 6 searches the user information management DB 69 with the user ID received in step S13 as a search key and retrieves the corresponding user attribute information. Then, the communication unit 61 transmits the user attribute information to the advertising transmission control device 5. Consequently, the communication unit 51 of the advertising transmission control device 5 receives (acquires) the user attribute information. Thus, the communication unit 51 serves as an example of a user attribute information acquisition unit that acquires attribute information of a user.

In step S17, the communication unit 51 associates the user ID received in step S14, the user information based on the user attribute information received in step S16, the information on the departure location and destination received in step S14, and the vehicle ID received in step S14 with one another and generates a new record in the advertising transmission information management table as illustrated in FIG. 5, thus initiating management for transmitting advertising data related to advertising content to be viewed by the user A who has requested dispatch of a taxi. The vehicle ID is stored as an advertising content display vehicle, that is, a vehicle scheduled to display the advertisement content.

### <Storage of Additional Information Including Transmission Time of Advertising Data Related to Advertising Content, Advertising Content Display Vehicle, and Content Number>

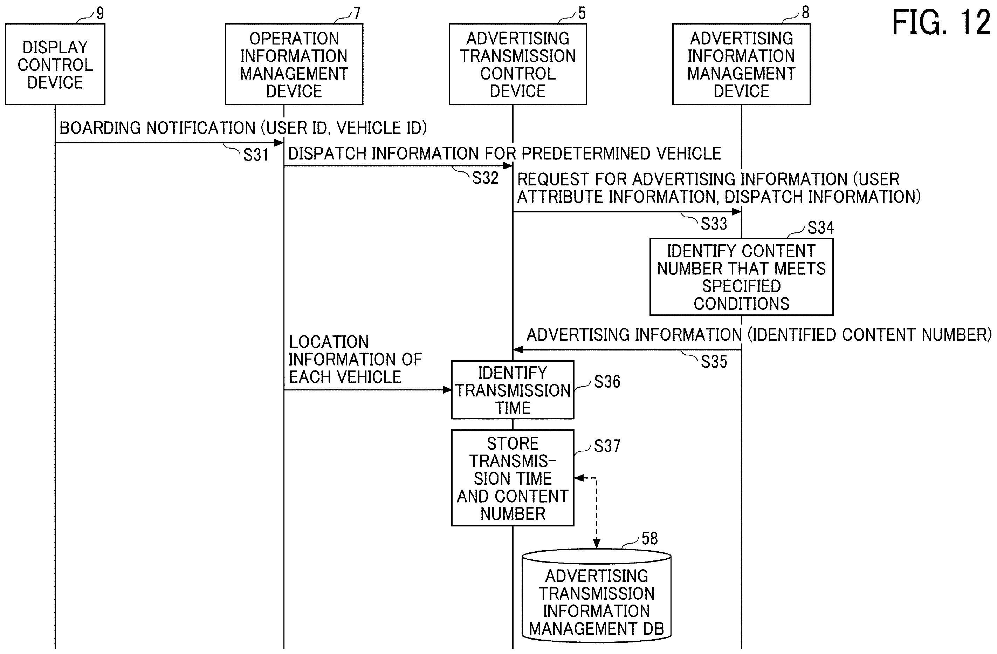

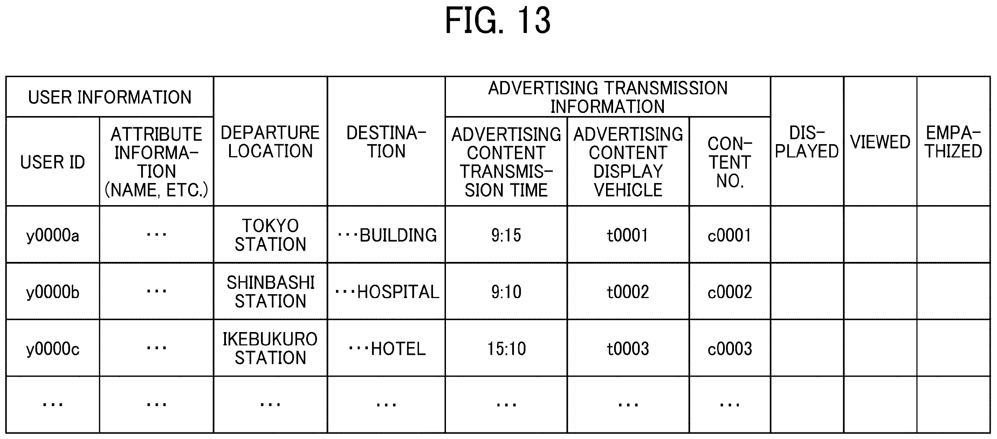

Referring to FIGS. 12 and 13, a description is given below of a process for the advertising transmission control device 5 to store additional information including the transmission time of advertising data related to advertising content, the advertising content display vehicle, and the content number in the advertising transmission information management table. FIG. 12 is a sequence diagram illustrating a process for the advertising transmission device 5 to prepare for transmitting advertising data related to advertising content to the display control device 9 at a predetermined time.

When the user A boards the taxi T, in step S31, in response to an operation performed by the driver, the communication unit 91 of the display control device 9 transmits a boarding notification indicating that the user A has boarded the taxi T to the operation information management device 7, as illustrated in FIG. 12. The boarding notification includes, among the distribution information received in step S14, the user ID of the user A who has boarded the taxi T and the vehicle ID of the taxi T which the user A has boarded. Consequently, the communication unit 71 of the operation information management device 7 receives the boarding notification.

Instead of the driver, the user A may use the taxi allocation application of the user terminal 3 to transmit the user ID of the user A to the display control device 9. In this case, the user uses the user terminal 3 to scan a Quick Response Code^{®} (QR Code^{®})-for example, one indicated on a sticker affixed inside the taxi T-so that the user terminal 3 is connected to the display control device 9 and enables data communication.

Alternatively, the user terminal 3 scans a QR Code^{®} so that the user terminal 3 is directly connected to the operation information management device 7 and enables data communication. In this case, the QR code^{®} includes the vehicle ID. Then, the user terminal 3 transmits the boarding notification to the operation information management device 7.

In step S32, the communication unit 71 of the operation information management device 7 searches the dispatch information management DB 79 with the user ID and the vehicle ID received in step S31 as search keys and retrieves the corresponding dispatch information for one record. Then, the communication unit 71 transmits the dispatch information to the advertising transmission control device 5. Consequently, the communication unit 51 of the advertising transmission control device 5 receives (acquires) the dispatch information. Thus, the communication unit 51 serves as an example of a dispatch information reception unit that receives dispatch information including vehicle identification information.

In step S33, the communication unit 51 of the advertising transmission control device 5 transmits a request for advertising information that includes the content number to the advertising information management device 8. The request includes the user attribute information received in step S14 and the operation information received in step S32. Consequently, the communication unit 81 of the user information management device 8 receives the request for advertising information.

In step S34, the communication unit 81 of the advertising information management device 8 uses the advertising information management DB 89 to identify the content number of advertising content that meets conditions indicated by the information, that is, the user attribute information and the dispatch information, received in step S33. For example, in the advertising information management DB 89, the content number of advertising content is identified that meets the conditions that today is included in the "displayable period" column, the user attribution information received in step S33 is included in the "target user attribution information" column, a time from the current time onward is included in the "displayable time" column, and at least a partial area between the departure location and the destination in the dispatch information is included in the "displayable area" column.

In step S35, the communication unit 81 transmits advertising information, which is a record including the content number identified in step S34, to the advertising transmission control device 5. Consequently, the communication unit 51 of the advertising transmission control device 5 receives (acquires) the advertising information. Thus, the communication unit 51 serves as an example of a content identification information acquisition unit that acquires content identification information.

In step S36, the communication unit 51 of the advertisement transmission control device 5 constantly receives the location information indicating the current place (location) of each vehicle received from the operation information management device 7. Thus, the communication unit 51 serves as an example of a location information acquisition unit that acquires location information indicating a current location of a vehicle. Then, the transmission identification unit 53 identifies a transmission time of advertising data related to the advertising content based on the location information and the advertising information received in step S35. Specifically, the transmission identification unit 53 refers to the location information and identifies a time (time period) from the current time onward, the time satisfying both the conditions of being within the displayable time and within the displayable area in the advertising information, as the transmission time of the advertising data related to the advertising content. For example, when the current time is included in the "displayable time" and the current vehicle location is before entering the "displayable area," the time when the vehicle location enters the "displayable area" is identified as the transmission time. By contrast, when the current vehicle location is included in the "displayable area" and the current time is before the "displayable time," the time when the current time is included in the "displayable time" is identified as the transmission time.

In step S37, the transmission identification unit 53 of the advertising transmission control device 5 stores (registers) the transmission time of the advertising data related to the advertising content identified in step S36 in the record generated in step S17, as illustrated in FIG. 13. The transmission identification unit 53 further stores (registers) the content number of the advertising content received in step S35 in the record generated in step S17.

Process of Displaying Advertising Content and Responding To Indicate That User Has Viewed Advertising Content and Empathized with Advertising Content

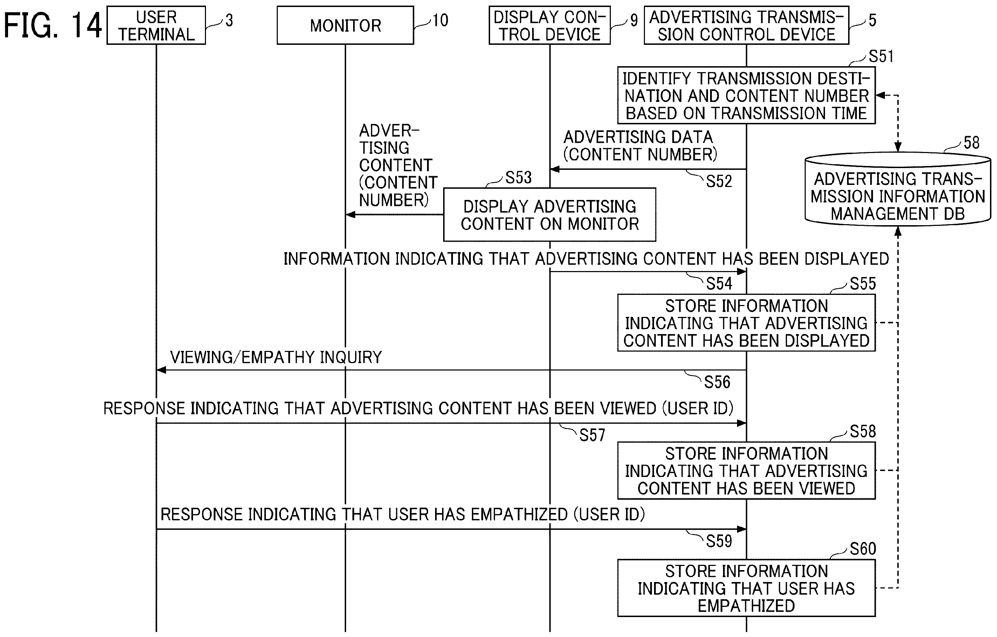

Referring to FIGS. 14 to 17, a description is given below of a process of displaying advertising content and responding to indicate that the user has viewed the advertising content and empathized with the advertising content. FIG. 14 is a sequence diagram illustrating a process in which advertising content is displayed and the user terminal 3 responds to indicate that the user has viewed the advertising content and empathized with the advertising content.

In step S51, the transmission identification unit 53 of the advertising transmission control device 5 refers to the advertising transmission information management DB 58 and identifies an advertising content display vehicle (for example, t0001), which is a transmission destination of advertising data related to advertising content, and a content number (for example, c0001) of the advertising content, based on the transmission time that is several seconds after the current time.

When the transmission time is reached, in step S52, the communication unit 51 retrieves, from the storing unit 50, the advertising data related to the advertising content indicated by the content number identified in step S51. Then, the communication unit 51 transmits the advertising data related to the advertising content to the display control device 9 of the vehicle (taxi T) as the transmission destination identified in step S51. The advertising data includes the content number described above. Thus, the communication unit 51 serves as an example of an advertising content transmission unit that transmits advertising data related to advertising content to a display control device. Consequently, the communication unit 91 of the display control device 9 receives the advertising data related to the advertising content.

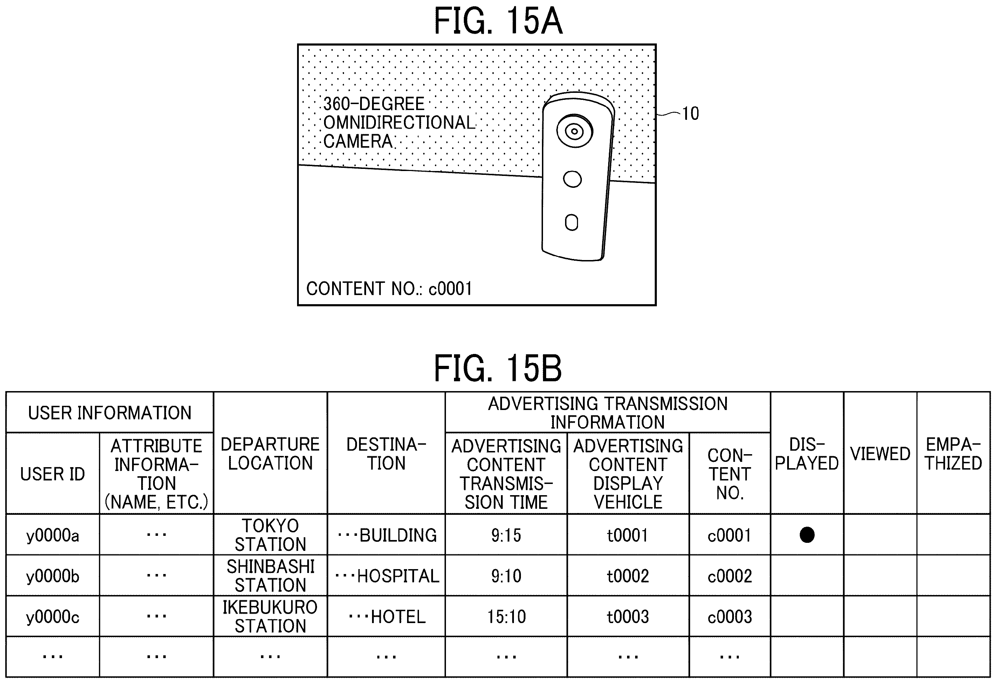

In step S53, the display control device 9 displays the advertisement content on the monitor 10 within the vehicle (taxi T) as illustrated in FIG. 15A. The displayed advertising content also includes the content number.

In step S54, the communication unit 91 transmits information indicating that the advertising content has been displayed to the advertising transmission control device 5. Consequently, the communication unit 51 of the advertising transmission control device 5 receives the information indicating that the advertising content has been displayed.

In step S55, the communication unit 51 stores additional information indicating that the advertising content has been displayed for the user ID identified in step S51 in the advertising transmission information management DB 58 as illustrated in FIG. 15B.

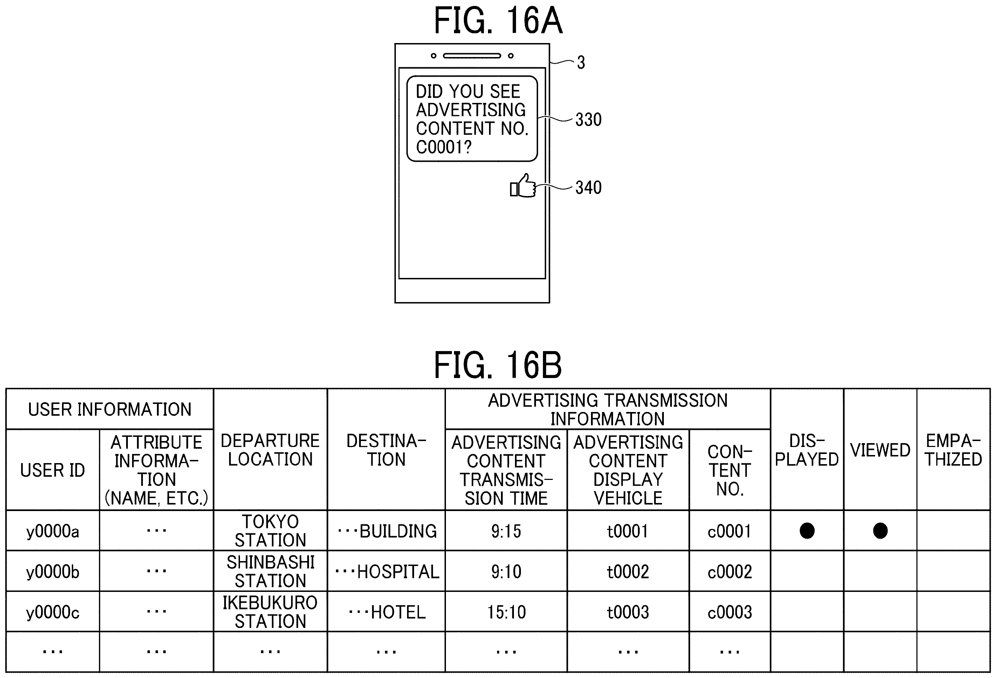

In step S56, the communication unit 51 transmits an advertising content viewing and empathy inquiry to the taxi dispatch application of the user terminal 3. The advertising content viewing and empathy inquiry is an inquiry asking whether the advertising content has been viewed and whether the user has empathized with the advertising content. Thus, the communication unit 51 serves as an example of a viewing inquiry transmission unit that transmits an inquiry asking whether the user has viewed advertising content. The communication unit 51 also serves as an example of an empathy inquiry transmission unit that transmits an inquiry asking whether the user has empathized with the advertising content. Consequently, the communication unit 31 of the user terminal 3 receives the inquiry. The display control unit 34 of the user terminal 3 causes an inquiry screen 330 and an empathy button 340 as illustrated in FIG. 16A to be displayed on the display 311. The empathy button 340 is a so-called "Like" button or "Good" button.

When the user A views the advertising content displayed on the monitor 10 as illustrated in FIG. 1 and taps the inquiry screen 330 illustrated in FIG. 16A, in step S57, the reception unit 32 receives information indicating that the advertising content has been viewed. Then, the communication unit 31 transmits a response indicating that the advertising content has been viewed to the advertising transmission control device 5. Consequently, the communication unit 51 of the advertising transmission control device 5 receives the response indicating that the advertising content has been viewed. Thus, the communication unit 51 serves as an example of an inquiry response reception unit that receives a response to an inquiry (in this case, an inquiry asking whether the user has viewed the advertising content).

In step S58, the communication unit 51 stores additional information indicating that the user A has viewed the advertising content for the user ID identified in step S51 in the advertising transmission information management table as illustrated in FIG. 16B.

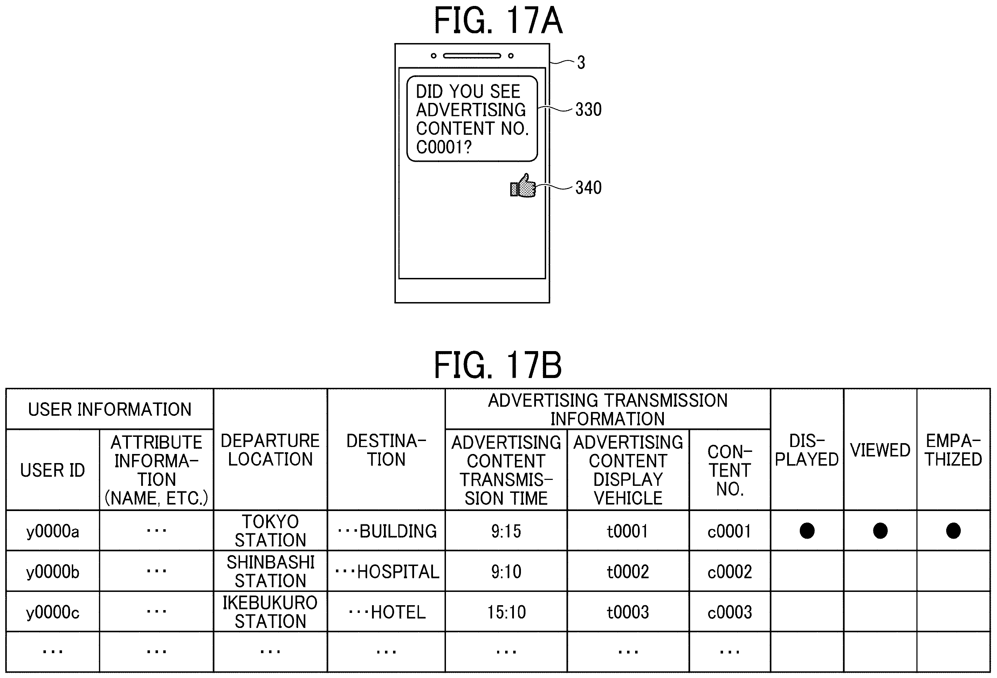

When the user A views the advertising content displayed on the monitor 10 as illustrated in FIG. 1 and taps the empathy button 340 as illustrated in FIG. 17A, in step S59, the reception unit 32 receives information indicating that the user A has empathized with the advertising content. Then, the communication unit 31 transmits a response indicating that the user A has empathized with the advertising content to the advertising transmission control device 5. Consequently, the communication unit 51 of the advertising transmission control device 5 receives the response indicating that the user A has empathized with the advertising content. Thus, the communication unit 51 serves as an example of an inquiry response reception unit that receives a response to an inquiry (in this case, an inquiry asking whether the user has empathized with the advertising content).

In step S60, the communication unit 51 stores additional information indicating that the user A has empathized with the advertising content for the user ID identified in step S51 in the advertising transmission information management table as illustrated in FIG. 17B.

### <Performance Management Process>

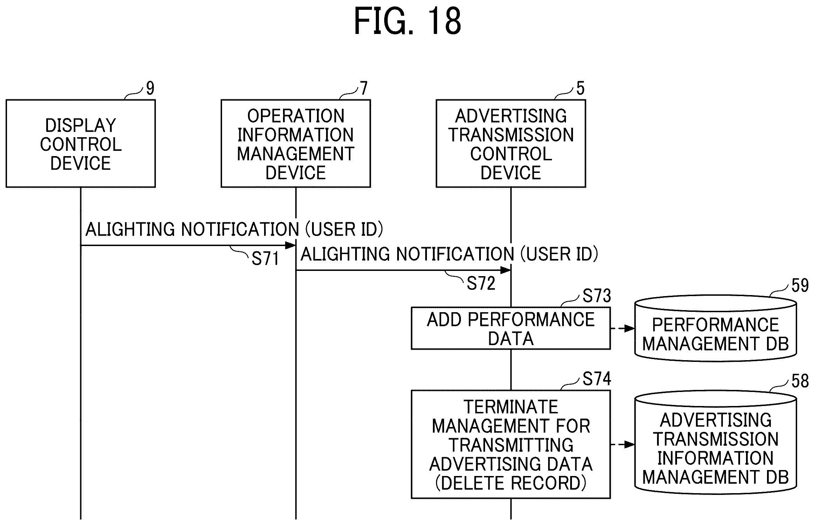

Referring to FIG. 18, a description is given below of a process for the advertising transmission control device 5 to store performance data of display, viewing, and empathy in response to the user A alighting from the taxi T at the destination. FIG. 18 is a sequence diagram illustrating a process for the advertising transmission control device 5 to store performance data of display, viewing, and empathy of advertising content after the user A alights from the taxi T.

When the user A alights from the taxi T, in step S71, in response to an operation performed by the driver of the taxi T, the communication unit 91 of the display control device 9 transmits an alighting notification to the operation information management device 7. The alighting notification includes the user ID of the user A who has alighted. Consequently, the communication unit 71 of the operation information management device 7 receives the alighting notification. The alighting notification may be transmitted to the operation information management device 7 from the dispatch communication device of the taxi instead of the display control device 9.

In step S72, the communication unit 71 of the operation information management device 7 changes the status of the operation information management DB 78 from "occupied" to "vacant," and further deletes the user ID, the departure location and the departure time, the destination and the scheduled travel distance, and the travel route. The communication unit 71 deletes the record including the user ID of the user A who has alighted from the taxi T from the dispatch information management DB 79.

Then, the communication unit 71 of the operation information management device 7 transmits (forwards) the alighting notification received in step S71 to the advertising transmission control device 5. Consequently, the communication unit 51 of the advertising transmission control device 5 receives the alighting notification.

In step S73, the communication unit 51 adds the counts for each result (display status, viewing status, and empathy status) in the advertising transmission information management table illustrated in FIG. 17B to the record of the content number identified in step S51 in the performance management table illustrated in FIG. 6.

In step S74, the communication unit 51 deletes the record related to the user ID of user A who has alighted from the taxi T from the advertising transmission information management table presented in FIG. 17B, thus terminating the management for transmitting advertising data related to advertising content to be viewed by the user A.

Through the series of processes described above, the user A is more likely to take an interest in and view the advertising content displayed on the nearest monitor 10 within the taxi T based on the attributes of the user A, and thus the effectiveness of the advertisement in terms of return on investment is enhanced.

Further, the performance information generation unit 55 of the advertising transmission control device 5 can generate performance information visualizing the effectiveness of the advertisement in terms of return on investment based on the data stored in the performance management DB 59.

As described above, increasing opportunities for passengers to view advertising content within the taxi T enhances the effectiveness of advertisements in terms of return on investment within a taxi more than before.

The above-described embodiments are illustrative and do not limit the present disclosure. Thus, numerous additional modifications and variations are possible in light of the above teachings.
(1) For example, when multiple user terminals 3 in which the application of the present embodiment is installed are present in the same taxi T, the following process may be performed.
(1-1) The communication unit 51 of the advertising transmission control device 5 sequentially transmits advertising data related to advertising content to the display control device 9 for each user who has boarded the taxi T, to cause the advertising content to be displayed on the monitor 10.
(1-2) The communication unit 51 of the advertising transmission control device 5 transmits advertising data related to advertising content to the display control device 9 in order of users with the highest number of advertising content that meets the conditions in step S34, to cause the advertising content to be displayed on the monitor 10.
(1-3) The communication unit 51 of the advertising transmission control device 5 transmits advertising data related to advertising content to the display control device 9 in order of users with the highest number of responses indicating that the advertising content has been viewed in step S57 or responses indicating that the user has empathized with the advertising content in step S59, to cause the advertising content to be displayed on the monitor 10.
(1-4) The communication unit 51 of the advertising transmission control device 5 causes advertising content to be displayed on the monitor 10 through one or more of the above processes (1-1) to (1-3) for a predetermined number of user terminals 3 among the multiple user terminals 3, and directly transmits advertising data related to the advertising content to the remaining user terminals 3 to cause the advertising content to be displayed on the remaining user terminals 3.
(2) The communication unit 51 of the advertising transmission control device 5 may distribute coupons or grant points for designated services to the user terminal 3, or reduce or waive the fee of the taxi T, depending on the number of responses indicating that the advertising content has been viewed in step S57 or responses indicating that the user has empathized with the advertising content in step S59.
(3) Each of the above IDs is an example of identification information.
(4) The functionality of the elements disclosed herein may be implemented using circuitry or processing circuitry which includes general purpose processors, special purpose processors, integrated circuits, application-specific integrated circuits (ASICs), field-programmable gate arrays (FPGAs), and/or combinations thereof which are configured or programmed, using one or more programs stored in one or more memories, to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein which is programmed or configured to carry out the recited functionality.
   There is a memory that stores a computer program which includes computer instructions. These computer instructions provide the logic and routines that enable the hardware (e.g., processing circuitry or circuitry) to perform the method disclosed herein. This computer program can be implemented in known formats as a computer-readable storage medium, a computer program product, a memory device, a recording medium such as a compact disc-read-only memory (CD-ROM) or DVD, and/or the memory of an FPGA or ASIC.
(5) Each of the above programs may be recorded on a (non-transitory) recording medium and distributed, and may also be provided via the communication network 100 such as the Internet.
(6) The CPUs 301 and 501, which function as hardware processors, may each be either a single unit or multiple units.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc-read-only memory (CD-ROM), a magnetic tape device, or a solid state memory device.

## Claims

1. An advertising transmission control device (5) for controlling transmission of advertising data related to advertising content, the device (5) comprising:
a dispatch information reception unit (51) configured to receive dispatch information including vehicle identification information for identifying a vehicle dispatched in response to a dispatch request from a user terminal of a user;
a user attribute information acquisition unit (51) configured to acquire attribute information of the user from a user information management device that stores the attribute information for each user;
a content identification information acquisition unit (51) configured to acquire content identification information corresponding to the attribute information of the user acquired by the user attribute information acquisition unit (51), from an advertising information management device that stores the content identification information for identifying the advertising content in association with attribute information of a target recipient of the advertising content; and
an advertising content transmission unit (51) configured to transmit the advertising data related to the advertising content to a display control device of the vehicle identified by the vehicle identification information, the advertising content being identified by the content identification information acquired by the content identification information acquisition unit (51).

2. The advertising transmission control device (5) according to claim 1, further comprising a location information acquisition unit (51) configured to acquire location information indicating a current location of the dispatched vehicle from an operation information management device that manages operation information including the current location of each vehicle,
wherein the advertising content transmission unit (51) is configured to transmit the advertising data related to the identified advertising content to the display control device at a transmission time based on the operation information of the dispatched vehicle.

3. The advertising transmission control device (5) according to claim 1, further comprising:
a viewing inquiry transmission unit (51) configured to transmit, to the user terminal of the user, an inquiry asking whether the user has viewed the advertising content related to the advertising data transmitted by the advertising content transmission unit (51);
an inquiry response reception unit (51) configured to receive a response to the inquiry; and
a storing unit (50) configured to store information indicating that the user has viewed the advertising content in response to the inquiry response reception unit (51) receiving the response to the inquiry.

4. The advertising transmission control device (5) according to claim 1, further comprising:
an empathy inquiry transmission unit (51) configured to transmit, to the user terminal of the user, an inquiry asking whether the user has empathized with the advertising content related to the advertising data transmitted by the advertising content transmission unit (51);
an inquiry response reception unit (51) configured to receive a response to the inquiry; and
a storing unit (50) configured to store information indicating that the user has empathized with the advertising content in response to the inquiry response reception unit (51) receiving the response to the inquiry.

5. A communication system (1) comprising:
the advertising transmission control device (5) according to any one of claims 1 to 4;
and
the user terminal (3) of the user configured to communicate with the advertising transmission control device (5), the user terminal (3) being installed with an application.

6. A communication system (1) comprising:
a user terminal (3) of a user;
a display control device (9) configured to display advertising content on a display of a vehicle; and
an advertisement transmission system (2) configured to cause the display control device (9) to perform control to display the advertising content,
the advertisement transmission system (2) including:
a user information management device (6) configured to store attribute information for each user;
an advertising information management device (8) configured to store content identification information for identifying the advertising content in association with attribute information of a target recipient of the advertising content;
a dispatch information reception unit (51) configured to receive dispatch information including vehicle identification information for identifying the vehicle dispatched in response to a dispatch request from the user terminal (3) of the user;
a user attribute information acquisition unit (51) configured to acquire the attribute information of the user from the user information management device (6);
a content identification information acquisition unit (51) configured to acquire, from the advertising information management device (8), the content identification information corresponding to the attribute information of the user acquired by the user attribute information acquisition unit (51); and
an advertising content transmission unit (51) configured to transmit advertising data related to the advertising content to the display control device (9) of the vehicle identified by the vehicle identification information, the advertising content being identified by the content identification information acquired by the content identification information acquisition unit (51),
the display control device (9) including a display control unit (94) configured to display the identified advertising content on the display.

7. An advertising transmission control method executed by a computer that controls transmission of advertising data related to advertising content, the method comprising:
receiving (S14) dispatch information including vehicle identification information for identifying a vehicle dispatched in response to a dispatch request from a user terminal of a user;
acquiring (S16) attribute information of the user from a user information management device that stores the attribute information for each user;
acquiring (S35) content identification information corresponding to the attribute information of the user from an advertising information management device that stores the content identification information for identifying the advertising content in association with attribute information of a target recipient of the advertising content; and
transmitting (S52) the advertising data related to the advertising content identified by the content identification information to a display control device of the vehicle identified by the vehicle identification information.

8. A carrier medium carrying computer-readable code for controlling a computer system to carry out the method according to claim 7.
